# EUROPÄISCHE PATENTSCHRIFT

(11) **EP 1 240 758 B1**
(45) Veröffentlichungstag und Bekanntmachung des Hinweises auf die Patenterteilung: **21.06.2006**
(21) Anmeldenummer: 00987091.6
(22) Anmeldetag: 08.11.2000
(51) Int. Cl.: H04L 12/58, H04Q 7/22, H04L 29/06

(54) **VERFAHREN ZUR ÜBERTRAGUNG VON ELEKTRONISCHEN POSTNACHRICHTEN**
METHOD FOR TRANSMITTING ELECTRONIC POSTAL MESSAGES
PROCEDE DE TRANSMISSION DE MESSAGES POSTAUX ELECTRONIQUES

(30) Priorität: 09.12.1999 DE 19959528
(43) Veröffentlichungstag der Anmeldung: 18.09.2002
(73) Patentinhaber: ROBERT BOSCH GMBH, 70442 Stuttgart (DE)
(72) Erfinder: LAUMEN, Josef, 31141 Hildesheim (DE); SCHMIDT, Gunnar, 38304 Wolfenbuettel (DE)
(86) Internationale Anmeldenummer: PCT/DE2000/003897
(87) Internationale Veröffentlichungsnummer: WO 2001/043348

(56) Entgegenhaltungen:
- EP-A- 0 777 394
- WO-A-99/52247
- DE-U- 29 816 131
- "ETSI TS 100901 Digital cellular telecommunications system (Phase 2+); Technical realization of the Short Message Service (SMS); Point-to-Point (PP) (GSM 03.40 version 7.3.0 Release 1998)" ETSI SPECIFICATION, November 1999 (1999-11), XP002168377 in der Anmeldung erwähnt
- 'SMS E-Mail Parameters, T2(99)-1068 Change Request to 23.040' 3GPP SMG MEETING T2 NR. 7, ETSI SMG4, [Online] 22 November 1999, YSTAD, SWEDEN, Seiten 1 - 5 Gefunden im Internet: <URL:http://www.3gpp.org/ftp/tsg_t/WG2_Capa bility/TSGT2_07/Docs/T2-991068%20SMS%20e-ma il%20parameters.zip> [gefunden am 2004-09-23]

## Beschreibung

### Stand der Technik

Die Erfindung geht von einem Verfahren zur Übertragung von elektronischen Postnachrichten nach der Gattung des Hauptanspruchs aus.

Aus der Veröffentlichung "SMS-E-Mail Parameter", T2(99)-1068 Change Request to 23.040 ist bereits ein Verfahren zur Übertragung von Internet-E-Mails unter Verwendung des SMS-Kurznachrichtendienstes (Short Message Service) bekannt, wobei mit einer SMS-Kurznachricht in einem Telekommunikationsnetz eine Internet-E-Mail sowie Adreß- und Identifikationsdaten in verschiedenen Kopfinformationen der SMS-Kurznachricht für die Übertragung der Internet-E-Mail im Internet übertragen werden.

### Vorteile der Erfindung

Das erfindungsgemäße Verfahren zur Übertragung von elektronischen Postnachrichten mit den Merkmalen des Hauptanspruchs hat demgegenüber den Vorteil, daß mit der Kurznachricht eine erste Kopfinformation mit mehreren Datenfeldern übertragen wird, die die Adreß- und Identifikationsdaten umfassen. Auf diese Weise müssen für die Übertragung der Adreß- und Identifikationsdaten nicht mehrere Kopfinformationen definiert werden, so daß der für die Definition zusätzlicher Kopfinformationen erforderliche Datenaufwand eingespart wird. Dies kommt insbesondere solchen Kurznachrichten zugute, die auf eine vorgegebene Datenmenge begrenzt sind, so daß für die mit der Kurznachricht zu übertragende elektronische Postnachricht ein Maximum an Datenkapazität in der Kurznachricht verfügbar ist.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß die Datenfelder durch Schlüsselwörter für die Übertragung in der ersten Kopfinformation gekennzeichnet werden. Auf diese Weise lassen sich die Datenfelder mit geringem Aufwand eindeutig unterscheiden.

Ein weiterer Vorteil besteht darin, daß die Schlüsselwörter codiert übertragen werden. Auf diese Weise wird die Beeinträchtigung der Datenkapazität der Kurznachricht durch die Übertragung der Schlüsselwörter auf ein Minimum reduziert.

Besonders vorteilhaft ist es, daß mit der ersten Kopfinformation ein Kennzeichnungsdatenfeld übertragen wird, das den Aufbau der ersten Kopfinformation kennzeichnet. Auf diese Weise wird eine fehlerfreie Auswertung der ersten Kopfinformation in einem ersten Empfänger der Kurznachricht gewährleistet, so daß die in der Kurznachricht enthaltene elektronische Postnachricht an den oder die richtigen zweiten Empfänger im zweiten Kommunikationsnetz übertragen werden kann.

Ein weiterer Vorteil besteht darin, daß eine zweite Kopfinformation mit der Kurznachricht übertragen wird, die auf das Vorhandensein der ersten Kopfinformation hinweist.

Auf diese Weise wird sichergestellt, daß im ersten Empfänger die erste Kopfinformation überhaupt ausgewertet wird, um eine Weiterleitung der in der Kurznachricht enthaltenen Nutzdaten als elektronische Postnachricht an einen zweiten Empfänger in einem zweiten Kommunikationsnetz beim ersten Empfänger zu veranlassen.

Ein weiterer Vorteil besteht darin, daß mindestens eine dritte Kopfinformation mit der Kurznachricht übertragen wird, die die elektronische Postnachricht als Teil einer mittels Übertragung mehrerer Kurznachrichten verketteten gesamten elektronischen Postnachricht kennzeichnet. Auf diese Weise ist es insbesondere bei auf eine vorgegebene Datenmenge beschränkten Kurznachrichten möglich, dennoch eine die vorgegebene Datenmenge überschreitende elektronische Postnachricht durch Verkettung mehrerer Kurznachrichten im ersten Kommunikationsnetz zu versenden, wobei die elektronischen Postnachrichten der über die mindestens eine dritte Kopfinformation miteinander verketteten Kurznachrichten im ersten Empfänger zu einer gesamten elektronischen Postnachricht zusammengefügt und an mindestens eine in der ersten Kopfinformation angegebene zweite Zieladresse versendet werden können.

### Zeichnung

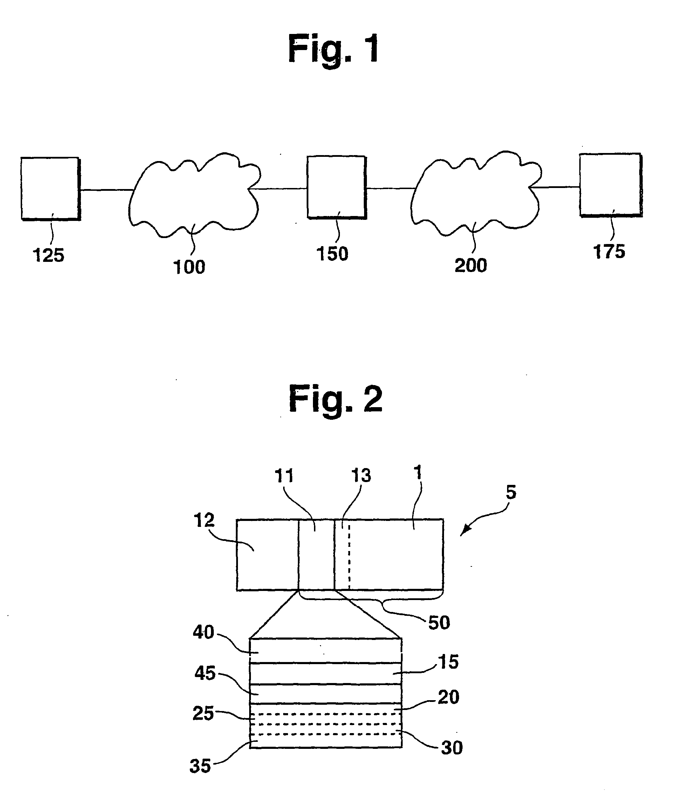

Ein Ausführungsbeispiel der Erfindung ist in der Zeichnung dargestellt und in der nachfolgenden Beschreibung näher erläutert. Es zeigen Figur 1 eine Übertragungsstrecke von einem Sender zu einem Empfänger und Figur 2 einen schematischen Aufbau einer Kurznachricht mit integrierter elektronischer Postnachricht.

### Beschreibung des Ausführungsbeispiels

In Figur 1 kennzeichnet 125 einen Sender, der eine Kurznachricht mit integrierter elektronischer Postnachricht an einen ersten Empfänger 150 über ein erstes Kommunikationsnetz 100 überträgt. Der erste Empfänger 150 extrahiert aus der Kurznachricht die elektronische Postnachricht und leitet sie über ein zweites Kommunikationsnetz 200 an einen zweiten Empfänger 175 weiter.

In der Figur 2 kennzeichnet 5 eine Kurznachricht. Die Kurznachricht 5 wird vom Sender 125 des ersten Kommunikationsnetzes erzeugt und an den ersten Empfänger 150 des ersten Kommunikationsnetzes 100 über das erste Kommunikationsnetz 100 übertragen. Für die Übertragung solcher Kurznachrichten 5 wird dazu im ersten Kommunikationsnetz 100 ein sogenannter Kurznachrichtendienst eingerichtet. Ein solcher Kurznachrichtendienst existiert beispielsweise in einem als Mobilfunknetz ausgebildeten ersten Kommunikationsnetz 100. Dabei kann es sich bei einem solchen Mobilfunknetz beispielsweise um ein Mobilfunknetz nach dem GSM-Standard (Global System for Mobile Communications) oder nach dem UMTS-Standard (Universal Mobile Telecommunications System) handeln. Beim GSM-Mobilfunknetz ist der sogenannte SMS-Kurznachrichtendienst (Short Message Service) spezifiziert, der die Versendung von SMS-Kurznachrichten zwischen einem Sender und einem Empfänger zur Verfügung stellt, wobei die SMS-Kurznachrichten auf Textnachrichten einer maximalen Textlänge von derzeit 160 Zeichen beschränkt sind. Sollen größere Textnachrichten übertragen werden, so bietet der SMS-Kurznachrichtendienst die Möglichkeit einer Verkettung mehrerer SMS-Kurznachrichten, d.h. die zu übertragende Textnachricht wird auf mehrere SMS-Kurznachrichten verteilt.

Die in der Figur 2 dargestellte Kurznachricht 5 umfaßt grundsätzlich eine zweite Kopfinformation 12 und ein Datenteil 50. Die zweite Kopfinformation 12 umfaßt Signalisierungseinträge sowie eine erste Zieladresse für die zu sendende Kurznachricht 5 bzw. eine Quelladresse für die zu empfangende Kurznachricht 5. Die erste Zieladresse kennzeichnet den ersten Empfänger 150 der Kurznachricht 5 im ersten Kommunikationsnetz 100 und die Quelladresse kennzeichnet den Sender 125 der Kurznachricht 5 im ersten Kommunikationsnetz 100. Der Datenteil 50 umfaßt die eigentlich zu übermittelnde Nachricht und damit die sogenannten Nutzdaten. Beim SMS-Kurznachrichtendienst werden dabei die Quelladresse bzw. die erste Zieladresse gemäß den Veröffentlichungen "Technical Realisation of the Short Message Service (SMS); Point-to-Point (PP)", GSM 03.40 V7.1.0 (1998-11) und "Technical Realisation of the Short Message Service (SMS); Point-to-Point (PP)", 3G 23.040 V3.2.0 (1999-10) über eine sogenannte MSISDN-Nummer (Mobile Subscriber Integrated Services Digital Network) identifiziert. Bei der Übertragung der Kurznachricht 5 im ersten Kommunikationsnetz 100 adressiert eine in Figur 1 nicht dargestellte Netzwerkeinheit des ersten Kommunikationsnetzes 100 den ersten Empfänger 150 der Kurznachricht anhand der ersten Zieladresse und ersetzt diese durch die Quelladresse des Senders 125. Standardgemäß enthält dabei die zweite Kopfinformation 12 also genau eine Quelladresse oder genau eine erste Zieladresse.

Die Kurznachricht 5 umfaßt gemäß der Figur 2 eine erste Kopfinformation 11, die im Datenteil 50 der Kurznachricht 5 angeordnet ist. Die erste Kopfinformation 11 wird beim SMS-Kurznachrichtendienst als Benutzerdatenkopfinformation oder "User Data Header" bezeichnet.

Das Vorhandensein der ersten Kopfinformation 11 im Datenteil 50 wird durch einen entsprechenden Signalisierungseintrag in der zweiten Kopfinformation 12 angezeigt. Beim SMS-Kurznachrichtendienst sind verschiedene Typen von "User Data Header" gemäß den genannten Veröffentlichungen "Technical Realisation of the Short Message Service (SMS); Point-to-Point (PP)" spezifiziert. Sie werden dabei durch ein Kennzeichnungsdatenfeld 15 in der ersten Kopfinformation 11 gemäß der Figur 2 voneinander unterschieden, wobei die Figur 2 den Aufbau der ersten Kopfinformation 11 detailliert darstellt.

Im Datenteil 50 der Kurznachricht 5 kann nun eine elektronische Postnachricht 1 übertragen werden. Die Kurznachricht 5 mit der elektronischen Postnachricht 1 wird dabei zum ersten Empfänger 150 des ersten Kommunikationsnetzes 100 übertragen, der auch Teilnehmer des zweiten Kommunikationsnetzes 200 ist, wobei die elektronische Postnachricht 1 vom ersten Empfänger 150 an den zweiten Empfänger 175 des zweiten Kommunikationsnetzes 200 übertragen werden soll. Dabei kann es sich bei dem zweiten Kommunikationsnetz 200 beispielsweise um das Internet handeln, wobei die elektronische Postnachricht 1 dann beispielsweise eine Internet-E-Mail darstellt.

Mit der ersten Kopfinformation 11 werden nun mehrere Datenfelder 20, 25, 30, 35 übertragen, die Adreß- und Identifikationsdaten für die Übertragung der elektronischen postnachricht 1 im zweiten Kommunikationsnetz 200 umfassen. Nach Auswertung dieser Adreß- und Identifikationsdaten im ersten Empfänger 150 der Kurznachricht 5, der beispielsweise ein Dienstezentrum oder Servicecenter des ersten Kommunikationsnetzes 100 und/oder des zweiten Kommunikationsnetzes 200 darstellen kann, kann die elektronische Postnachricht 1 an den zweiten Empfänger 175 des zweiten Kommunikationsnetzes 200 weitergeleitet werden. Dazu muß jedoch dem ersten Empfänger 150 der Kurznachricht 5 mitgeteilt werden, wie die erste Kopfinformation 11 aufgebaut ist bzw. ob solche Datenfelder 20, 25, 30, 35 in der ersten Kopfinformation 11 vorhanden sind. Dies geschieht anhand des Kennzeichnungsdatenfeldes 15. Dort gibt ein sogenannter Identifikator an, in welcher Weise die Adreß- und Identifikationsdaten in der ersten Kopfnachricht 11 vorliegen. Beispielsweise kann der Identifikator angeben, daß die Datenfelder 20, 25, 30, 35 der ersten Kopfinformation 11 eine aus der Veröffentlichung "Standard for the Format of ARPA Internet Text Messages" IETF, RFC 822 bekannte Adressierung und Identifikation der elektronischen Postnachricht 1 umfassen. Gemäß der Figur 2 ist beispielhaft die erste Kopfinformation 11 für eine RFC 822-Adressierung gemäß der genannten Veröffentlichung dargestellt. Dabei ist der ersten Kopfinformation 11 ein erstes Längendatenfeld 40 vorangestellt, das die Länge UDHL (User Data Header Length) der ersten Kopfinformation 11 angibt. Dem ersten Längendatenfeld 40 folgt dann das bereits beschriebene Kennzeichnungsdatenfeld 15 mit dem Identifikator IEI (Information Element Identifier), der in diesem Fall angibt, daß die Datenfelder 20, 25, 30, 35 eine RFC 822-Adressierung darstellen. Das Kennzeichnungsdatenfeld 15 wird von einem zweiten Längendatenfeld 45 gefolgt, daß die Länge IEIDL (Information Element Identifier Data Length) der Datenfelder 20, 25, 30, 35 angibt. Dem zweiten Längendatenfeld 45 folgen dann die Datenfelder 20, 25, 30, 35. Diese werden durch Schlüsselwörter voneinander unterschieden, wobei jedem Datenfeld 20, 25, 30, 35 ein Schlüsselwort zugeordnet ist. Diese Schlüsselworte sind dem ersten Empfänger 150 der Kurznachricht 5 bekannt. Da aufgrund der vorgegebenen Schlüsselwörter eine eindeutige Identifizierung der Datenfelder 20, 25, 30, 35 gegeben ist, können je nach gewünschter Anwendung in ihrer Art und Anzahl verschiedene Datenfelder in der ersten Kopfinformation 11 angeordnet sein. Gemäß der Figur 2 sind vier Datenfelder 20, 25, 30, 35 vorgesehen. Es könnten jedoch auch mehr oder weniger sein. Ein erstes Datenfeld 20 ist dabei beispielhaft als Zieladreßdatenfeld ausgebildet, das eine zweite Zieladresse der elektronischen Postnachricht 1 umfaßt und damit den zweiten Empfänger 175 der elektronischen Postnachricht 1 im zweiten Kommunikationsnetz 200 kennzeichnet. Das Zieladreßdatenfeld 20 ist daher für die Weiterleitung der elektronischen Postnachricht 1 im zweiten Kommunikationsnetz 200 unerläßlich, es kann jedoch aufgrund des zugeordneten Schlüsselwortes an beliebiger Stelle im Bereich der Datenfelder in der ersten Kopfinformation 11 angeordnet sein, da es anhand des Schlüsselwortes im ersten Empfänger 150 der Kurznachricht 5 eindeutig identifiziert wird. Entsprechendes gilt für alle anderen Datenfelder. Ein zweites Datenfeld 25 der ersten Kopfinformation 11 kann dabei als Quelladreßdatenfeld ausgebildet sein und die Quelladresse der elektronischen Postnachricht 1 umfassen, so daß beim zweiten Empfänger 175 der elektronischen Postnachricht 1 im zweiten Kommunikationsnetz 200 der Sender 125 der elektronischen Postnachricht 1 identifizierbar ist.

Ein drittes Datenfeld 30 der ersten Kopfinformation 11 kann als Bezeichnungsdatenfeld ausgebildet sein, das eine Bezeichnung oder einen Titel der elektronischen Postnachricht 1 umfaßt.

Ein viertes Datenfeld 35 der ersten Kopfinformation 11 kann als Namensdatenfeld ausgebildet sein, das den Namen des Senders 125 der elektronischen Postnachricht 1 umfaßt, jedoch nicht in Form der Quelladresse, sondern beispielsweise in Form eines Vor- und eines Nachnamens, also als persönlicher Name.

Die Zuordnung der Datenfelder zu den Schlüsselworten kann beispielsweise wie folgt aussehen: Dem Zieladreßdatenfeld ist das Schlüsselwort "To" zugeordnet. Dem Quelladreßdatenfeld 25 ist das Schlüsselwort "From" zugeordnet. Dem Bezeichnungsdatenfeld 30 ist das Schlüsselwort "Subject" zugeordnet. Das Namensdatenfeld 35 soll in diesem Beispiel nicht verwendet werden.

Im folgenden wird ein Beispiel für den Aufbau der ersten Kopfinformation 11 beschrieben. Dabei enthält zunächst die zweite Kopfinformation 12 den Signalisierungseintrag TP-UDHI (Transfer Protocol-User Data Header Identification), der angibt, ob die erste Kopfinformation 11 in der Kurznachricht 5 vorliegt. Ist dies der Fall, so ist TP-UDHI auf 1 gesetzt, andernfalls ist TP-UDHI auf 0 gesetzt. Die erste Kopfinformation 11 kann dann beispielsweise wie folgt aufgebaut sein: Im ersten Längendatenfeld 40 ist die Länge UDHL der ersten Kopfinformation 11 auf 39 im Hexadezimalsystem gesetzt. Im Kennzeichnungsdatenfeld 15 ist der Identifikator IEI auf 20 im Hexadezimalsystem gesetzt und referenziert durch diesen Wert die beschriebene RFC 822-Adreßierung gemäß einer entsprechenden Zuordnungstabelle. Im zweiten Längendatenfeld 45 ist die Länge IEIDL der Datenfelder 20, 25, 30 der ersten Kopfinformation 11 auf 37 im Hexadezimalsystem gesetzt. Im Zieladreßdatenfeld 20 referenziert das Schlüsselwort "To" mit folgender Zeichenkette aus 27 Zeichen eine als Internet-Adresse ausgebildete zweite Zieladresse für die in diesem Beispiel als Internet E-Mail ausgebildete electroniche Postnachricht 1:
To=Gunnar.Schmidt@Bosch.com

Im Quelladreßdatenfeld 25 referenziert das Schlüsselwort "From" eine ebenfalls als Internet-Adresse ausgebildete Quealladresse zur Identifikation des Senders 125 der elektronischen Postnachricht 1, wobei im Quelladreßdatenfeld 25 folgende Zeichenkette aus 23 Zeichen gebildet wird:
From=+49xxxyyyyy@zzz.de

Die Quelladresse ist dabei offensichtlich als eine Telefonnummer umfassende Internet-E-Mail-Adresse ausgebildet und nicht personalisiert. Eine personalisierte Identifikation des Senders 125 der elektronischen Postnachricht 1 ist unter Verwendung des Namensdatenfeldes 35 wie beschrieben möglich, aber in diesem Beispiel nicht vorgesehen.

Im Bezeichnungsdatenfeld 30 ist in diesem Beispiel eine Zeichenkette aus 12 Zeichen vorgesehen, bei der das Schlüsselwort "Subject" die Bezeichnung der elektronischen Postnachricht 1 wie folgt referenziert:
Subject=Test

Weitere Datenfelder sind in diesem Beispiel nicht in der ersten Kopfinformation 11 vorgesehen. Insgesamt umfassen in diesem Beispiel die drei verwendeten Datenfelder 20, 25, 30 zweiundsechzig Zeichen, die beispielsweise jeweils mit sieben Bit binär codiert werden, so daß für die Codierung insgesamt 55 Byte erforderlich sind. Dabei entspricht die Zahl 55 im Zehnersystem der Zahl 37 im Hexadezimalsystem und damit dem fur IEIDL vorgesehenen Wert.

Im beschriebenen Beispiel werden die einzelnen Datenfelder 20, 25, 30 nicht nur über die Schlüsselwörter eindeutig gekennzeichnet, sondern auch voneinander getrennt. Das bedeutet, daß der Inhalt eines jeden Datenfeldes 20, 25, 30 keine Schlüsselwörter enthalten darf. Es ist daher vorteilhaft, jedes Datenfeld 20, 25, 30 mit einem Trennungszeichen abzuschließen. Für das Zieladreßdatenfeld 20 könnte dann die Zeichenfolge ausgehend von obigem Beispiel wie folgt ausgebildet sein:
To=Gunnar. Schmidt@Bosch.com<CR>

Beispielhaft wurde hier als Trennungszeichen <CR>, d.h. Wagenrücklauf oder "Carriage Return" gewählt. Dieses verlängert die Zeichenfolge auf insgesamt 28 Zeichen.

Ebenfalls alternativ zum beschriebenen Beispiel können die Zeichen in acht Bit binär codiert werden. Damit vergrößert sich der mögliche Zeichenvorrat, die mögliche Anzahl von Zeichen für die elektronische Postnachricht 1 wird dadurch jedoch weiter verringert.

Im beschriebenen Beispiel bleiben für die eigentliche elektronische Postnachricht 1 im Datenteil 50 der Kurznachricht 5 weniger als 100 Zeichen übrig, wenn von einer Kurznachricht 5 nach SMS-Standard und der derzeitigen Begrenzung auf 160 Zeichen pro Kurznachricht in diesem SMS-Standard ausgegangen wird.

Es ist daher vorteilhaft, die Schlüsselwörter der beschriebenen RFC 822-Adressierung beispielsweise mit sieben Bit binär zu codieren, um Zeichen einzusparen. Dies kann über eine vorgegebene Referenztabelle erfolgen, die im Sender 125 und im ersten Empfänger 150 des ersten Kommunikationsnetzes 100 bekannt ist und beispielsweise folgendermaßen aussieht:

| Schlüsselwort | Binärcode (7 Bit) |
|---|---|
| To: | <0000000> |
| From: | <0000001> |
| Cc: | <0000010> |
| Bcc: | <0000011> |
| Subject: | <0000100> |
| ... | ... |

Neben den bereits beschriebenen Schlüselwörtern "To", "From" "Subject" enthält die Tabelle als weitere Schlüsselwörter: "Cc" und "Bcc". Außerdem ist in der Tabelle angedeutet, daß außer den beschriebenen noch weitere Schlüsselwörter vorgesehen sein können. Für jedes in der ersten Kopfinformation 11 verwendete Schlüsselwort ist dabei in der beschriebenen Weise ein Datenfeld in der ersten Kopfinformation 11 vorgesehen. Die Schlüsselwörter "Cc" und "Bcc" kennzeichnen weitere Zieladressen, an die die elektronische Postnachricht 1 im zweiten Kommunikationsnetz 200 zusätzlich zur unter dem Schlüsselwort "To" angegebenen zweiten Zieladresse übertragen werden soll.

Alternativ zum beschriebenen Beispiel können die Schlüsselwörter auch mit acht Bit binär kodiert werden.

Gemäß dem oben beschriebenen Beispiel würde sich durch die Codierung der Schlüsselwörter dann in der ersten Kopfinformation 11 folgendes ergeben: Im ersten Längendatenfeld 40 würde UDHL auf 2d im Hexadezimalsystem gesetzt werden. Im Kennzeichnungsdatenfeld 15 würde IEI nach wie vor auf 20 im Hexadezimalsystem gesetzt werden, um die RFC 822-Adreßierung nach wie vor zu referenzieren. Im zweiten Längendatenteld 45 würde IEIDL aut 2b im Hexadezimalsystem gesetzt werden. Durch die Codierung des Schlüsselwortes "To" gemäß der Tabelle mit dem Zeichen <0000000> würde die Zeichenfolge im Zieladreßdatenfeld 20 nunmehr 25 Zeichen umfassen und wie folgt aussehen:
<0000000>Gunnar.Schmidt@Bosch.com

Durch die Codierung des Schlüsselwortes "From" mit dem Zeichen <0000001> gemäß der Tabelle würde das Quelladreßdatenfeld 25 nunmehr eine Zeichenfolge mit 19 Zeichen umfassen und wie folgt aussehen:
<0000001>+41xxxyyyyy@zzz.de

Durch die Codierung des Schlüsselwortes "Subject" durch das Zeichen <0000100> gemäß der Tabelle würde das Bezeichnungsdatenfeld 30 nunmehr eine Zeichenfolge mit fünf Zeichen umfassen und wie folgt aussehen:
<0000100>Test

Somit ergeben sich für die verwendeten Datenfelder 20, 25, 30 nunmehr 49 Zeichen, die bei Binärcodierung mit jeweils 7 Bit 43 Bytes beanspruchen würden, wobei die Zahl 43 im Zehnersystem der Zahl 2b im Hexadezimalsystem und damit dem für IEIDL vorgesehenen Wert entspricht.

Auf diese Weise können Zeichen eingespart werden, die der elektronischen Postnachricht 1 zur Verfügung gestellt werden können.

Der Unterschied in den für IEIDL und UDHL vorgesehenen Werten in dem jeweils beschriebenen Beispiel rührt daher, daß eben für das erste Längendatenfeld 40, das zweite Längendatenfeld 45 und das Kennzeichnugsdatenfeld 15 ebenfalls Zeichen verwendet werden müssen. Der Unterschied zwischen dem Wert für UDHL und dem Wert für IEIDL beträgt in jedem der beiden Beispiele zwei Bytes, so daß für das erste Längendatenfeld 40, das zweite Längendatenfeld 45 und das Kennzeichnungsdatenfeld 15 insgesamt maximal 16 Binärstellen zur Verfügung stehen.

Es kann nun vorgesehen sein, daß neben der ersten Kopfinformation 11 mindestens eine dritte Kopfinformation 13 mit der Kurznachricht 5 übertragen wird, die die elektronische Postnachricht 1 als Teil einer mittels Übertragung mehrerer Kurznachrichten verketteten gesamten elektronischen Postnachricht 1 kennzeichnet. Die Reihenfolge zwischen der ersten Kopfinformation 11 und der dritten Kopfinformation 13 kann auch vertauscht sein. Lediglich die zweite Kopfinformation 12 sollte am Anfang der Kurznachricht 5 stehen. Auch weitere Kopfinformationen können der Kurznachricht 5 hinzugefügt werden in beliebiger Reihenfolge mit der ersten Kopfnachricht 11 und gegebenenfalls der dritten Kopfnachricht 13, wobei die zweite Kopfinformation 12 immer am Anfang der Kurznachricht 5 stehen muß. Da die dritte Kopfinformation 13 optional vorgesehen sein kann, ist sie in der Figur 2 gestrichelt dargestellt. Die dritte Kopfinformation 13 unterscheidet sich von der ersten Kopfinformation 11 auf jeden Fall durch den Identifikator im Kennzeichnungsdatenfeld 15. Anhand dieses Identifikators kann der erste Empfänger 150 im ersten Kommunikationsnetz 100 die erste Kopfinformation 11 von der dritten Kopfinformation 13 unterscheiden.

Die dritte Kopfinformation 13 muß außerdem eine Kennung enthalten, die die gesamte elektronische Postnachricht kennzeichnet. Im ersten Empfänger 150 des ersten Kommunikationsnetzes 100 werden dann sämtliche mittels Kurznachrichten eingegangene elektronische Postnachrichten miteinander zu der gesamten elektronischen Postnachricht verkettet, die durch die Kennung dieser gesamten elektronischen Postnachricht referenziert sind und in dieser Form als verkettete gesamte elektronische Postnachricht zum gemäß der jeweiligen ersten Kopfinformation 11 der entsprechenden Kurznachrichten 5 mittels der zweiten Zieladresse im Zieladressdatenfeld 20 adressierten zweiten Empfänger 175 im zweiten Kommunikationsnetz 200 übertragen. Dabei kann die dritte Kopfinformation 13 auch eine Reihenfolgennummer enthalten, die angibt, an welcher Stelle die elektronische Postnachricht 1 der jeweiligen Kurznachricht 5 in der verketteten gesamten elektronischen Postnachricht steht, so daß mehrere auf diese Weise gekennzeichnete elektronische Postnachrichten im ersten Empfänger 150 des ersten Kommunikationsnetzes 100 in der richtigen Reihenfolge miteinander verkettet werden können. Dabei kann es auch vorgesehen sein, für die Kennzeichnung der gesamten elektronischen Postnachricht und für die Kennzeichnung der Reihenfolgennummer der jeweiligen elektronischen Postnachricht jeweils eine eigene Kopfinformation in der Kurznachricht 5 vorzusehen und mit einem entsprechenden Identifikator im Kennzeichnungsdatenfeld 15 voneinander zu unterscheiden.

Durch Auswertung der ersten Kopfinformation 11 ist der erste Empfänger 150 im ersten Kommunikationsnetz 100 in der Lage, aus der Kurznachricht 5 die elektronische Postnachricht 1 aus dem Datenteil 50 zu extrahieren, da die erste Kopfinformation 11 und gegebenenfalls weitere Kopfinformationen des Datenteils 50, wie beispielsweise auch die dritte Kopfinformation 13 den Nutzdaten im Datenteil 50 stets vorangestellt werden und jeweils ein Längendatenfeld aufweisen, aus dem ihre Länge ermittelt werden kann. Aus der ersten Kopfinformation 11 werden dann außerdem die für die Adressierung und Identifikation der elektronischen Postnachricht 1 erforderlichen Informationen gewonnen, die für die Übertragung der extrahierten elektronischen Postnachricht 1 im zweiten Kommunikationsnetz 200 an den dort adressierten zweiten Empfänger 175 und die Identifikation des Senders 125 beim zweiten Empfänger 175 erforderlich sind. Für die reine Übertragung der elektronischen Postnachricht 1 an den zweiten Empfänger 175 des zweiten Kommunikationsnetzes 200 ist in der ersten Kopfinformation 11 von den verwendbaren Datenfeldern nur das Zieladreßdatenfeld 20 unabdingbar. Das Quelladreßdatenfeld 25 und das Namensdatenfeld 35 dienen lediglich der Identifikation des Senders 125 und das Bezeichnungsdatenfeld 30 dient lediglich der Betitelung und damit der Identifikation der elektronischen Postnachricht 1 selbst. Aus der dritten Kopfinformation 13, deren Vorhandensein ebenfalls durch einen entsprechenden Signalisierungseintrag in der zweiten Kopfinformation 12 referenziert wird, kann der erste Empfänger 150 der Kurznachricht 5 im ersten Kommunikationsnetz 100 erkennen, ob die elektronische Postnachricht 1 Teil einer gesamten zu verkettenden elektronischen Postnachricht gehört. Anhand einer weiteren in der Figur 2 nicht dargestellten Kopfinformation, deren Vorhandensein ebenfalls durch einen entsprechenden Signalisierungseintrag in der zweiten Kopfinformation 12 referenziert wird, kann der erste Empfänger 150 im ersten Kommunikationsnetz 100 erkennen, an welcher Stelle der zu verkettenden gesamten elektronischen Postnachricht die elektronische Postnachricht 1 der Kurznachricht 5 steht, sofern diese Angabe nicht bereits in der dritten Kopfinformation 13 enthalten ist.

Entsprechend der ermittelten Position der elektronischen Postnachricht 1 in der zu verkettenden gesamten elektronischen Postnachricht kann dann der erste Empfänger 150 im ersten Kommunikationsnetz 100 die elektronische Postnachricht 1 der Kurznachricht 5 an der entsprechenden Stelle der zu verkettenden gesamten elektronischen Postnachricht einbauen.

Das erfindungsgemäße Verfahren ist nicht auf den SMS-Kurznachrichtendienst im GSM-Mobilfunknetz begrenzt, sondern für beliebige Kurznachrichtendienste anwendbar, bei denen elektronische Postnachrichten mit Kurznachrichten übertragen werden, wobei es sich bei der elektronischen Postnachricht auch nicht um eine Internet-E-Mail handeln muß.

## Patentansprüche

1. Verfahren zur Übertragung von elektronischen Postnachrichten (1) unter Verwendung eines SMS-Kurznachrichtendienstes, wobei mit einer Kurznachricht (5) des SMS-Kurznachrichtendienstes in einem ersten Kommunikationsnetz (100) eine elektronische Postnachricht (1) sowie Adress-und Identifikationsdaten für die Übertragung der elektronischen Postnachricht (1) in einem zweiten Kommunikationsnetz (200) übertragen werden, wobei mit der Kurznachricht (5) eine Benutzerdatenkopfinformation "User Data Header" (11) mit mehreren Datenfeldern (20, 25, 30, 35) übertragen wird, wobei jedes der Datenfelder (20, 25, 30, 35) entweder Adress- oder Identifikationsdaten umfasst, **dadurch gekennzeichnet, dass** mit der Benutzerdatenkopfinformation (11) ein einzelner, sämtlichen Datenfeldern der Benutzerdatenkopfinformation zugeordneter Identifikator (15) übertragen wird, der gemäß einer Zuordnungstabelle angibt, dass die Datenfelder (20, 25, 30, 35) eine RFC 822-Adressierung umfassen.

2. Verfahren nach Anspruch 1, **dadurch gekennzeichnet, daß** die Datenfelder (20, 25, 30, 35) durch Schlüsselwörter für die Übertragung in der Benutzerdatenkopfinformation (11) **gekennzeichnet** werden.

3. Verfahren nach Anspruch 2, **dadurch gekennzeichnet, daß** die Schlüsselwörter kodiert übertragen werden.

4. Verfahren nach einem der vorherigen Ansprüche, **dadurch gekennzeichnet, daß** mit der Benutzerdatenkopfinformation (11) mindestens ein Zieladreßdatenfeld (20) übertragen wird, das eine Zieladresse der elektronischen Postnachricht (1) umfaßt.

5. Verfahren nach einem der vorherigen Ansprüche, **dadurch gekennzeichnet, daß** mit der Benutzerdatenkopfinformation (11) ein Quelladreßdatenfeld (25) übertragen wird, das die Quelladresse der elektronischen Postnachricht (1) umfaßt.

6. Verfahren nach einem der vorherigen Ansprüche, **dadurch gekennzeichnet, daß** mit der Benutzerdatenkopfinformation (11) ein Bezeichnungsdatenfeld (30) übertragen wird, das eine Bezeichnung der elektronischen Postnachricht (1) umfaßt.

7. Verfahren nach einem der vorherigen Ansprüche, **dadurch gekennzeichnet, daß** mit der Benutzerdatenkopfinformation (11) ein Namensdatenfeld (35) übertragen wird, das einen Namen des Absenders der elektronischen Postnachricht (1) umfaßt.

8. Verfahren nach einem der vorherigen Ansprüche, **dadurch gekennzeichnet, daß** eine zweite Kopfinformation (12) mit der Kurznachricht (5) übertragen wird, die auf das Vorhandensein der Benutzerdatenkopfinformation (11) hinweist.

9. Verfahren nach einem der vorherigen Ansprüche, **dadurch gekennzeichnet, daß** mindestens eine dritte Kopfinformation (13) mit der Kurznachricht (5) übertragen wird, die die elektronische Postnachricht (1) als Teil einer mittels Übertragung mehrerer Kurznachrichten verketteten gesamten elektronischen Postnachricht (1) kennzeichnet.

10. Verfahren nach einem der vorherigen Ansprüche, **dadurch gekennzeichnet, daß** das Ende der Datenfelder (20, 25, 30, 35) jeweils durch ein Trennungszeichen **gekennzeichnet** wird.

## Claims

1. Method for transmission of electronic mail messages (1) using an SMS short message service, with an electronic mail message (1) as well as address and identification data for the transmission of the electronic mail message (1) being transmitted in a second communication network (200) with a short message (5) in the SMS short message service in a first communication network (100), with user data header information "User Data Header" (11) being transmitted with a plurality of data fields (20, 25, 30, 35) with the short message (5), with each of the data fields (20, 25, 30, 35) comprising either address or identification data, **characterized in that** the user data header information (11) is transmitted with a single identifier (15), which is associated with all of the data fields of the user data header information and indicates, on the basis of an association table, that the data fields (20, 25, 30, 35) comprise RFC 822 addressing.

2. Method according to Claim 1, **characterized in that** the data fields (20, 25, 30, 35) are **characterized by** keywords for the transmission in the user data header information (11).

3. Method according to Claim 2, **characterized in that** the keywords are transmitted in a coded form.

4. Method according to one of the preceding claims,
**characterized in that** at least one destination address data field (20), which comprises a destination address for the electronic mail message (1), is transmitted with the user data header information (11).

5. Method according to one of the preceding claims,
**characterized in that** a source address data field (25), which comprises the source address of the electronic mail message (1), is transmitted with the user data header information (11).

6. Method according to one of the preceding claims,
**characterized in that** a title data field (30), which comprises a title for the electronic mail message (1), is transmitted with the user data header information (11).

7. Method according to one of the preceding claims,
**characterized in that** a name data field (35), which comprises a name of the sender of the electronic mail message (1), is transmitted with the user data header information (11).

8. Method according to one of the preceding claims,
**characterized in that** second header information (12) is transmitted with the short message (5), and indicates the presence of the user data header information (11).

9. Method according to one of the preceding claims,
**characterized in that** at least one item of third header information (13) is transmitted with the short message (5) and identifies the electronic mail message (1) as part of an overall electronic mail message (1) which is linked by means of the transmission of a plurality of short messages.

10. Method according to one of the preceding claims,
**characterized in that** the end of the data fields (20, 25, 30, 35) is in each case identified by a separating character.

## Revendications

1. Procédé de transmission de messages postaux électroniques (1) au moyen d'un service de messages courts (SMS), selon lequel avec un message court (5) du service de messages courts (SMS) dans un premier réseau de communication (100) on transmet un message postal électronique (1) ainsi que des données d'adresse et des données d'identification pour la transmission du message postal électronique (1) dans un second réseau de communication (200), avec le message court (5) une information d'en-tête de données d'utilisateur (11) « User Data Header » étant transmise avec plusieurs champs de données (20, 25, 30, 35), chacun des champs de données (20, 25, 30, 35) comprenant des données d'adresse ou des données d'identification,
**caractérisé en ce qu'**
on transmet avec l'information d'en-tête de données d'utilisateur (11) un seul identificateur (15) associé à tous les champs de donnés des informations d'en-tête de données d'utilisateur, indiquant d'après une table des références que les champs de données (20, 25, 30, 35) comprennent un adressage RFC 822.

2. Procédé selon la revendication 1,
**caractérisé en ce que**
les champs de données (20, 25, 30, 35) sont spécifiés par des mots clés pour la transmission dans l'information d'en-tête de données d'utilisateur (11).

3. Procédé selon la revendication 2,
**caractérisé en ce que**
les mots clés sont transmis de manière codée.

4. Procédé selon l'une quelconque des revendications précédentes,
**caractérisé en ce qu'**
avec l'information d'en-tête de données d'utilisateur (11) on transmet au moins un champ de données d'adresse cible (20) qui comprend une adresse cible du message postal électronique (1).

5. Procédé selon l'une quelconque des revendications précédentes,
**caractérisé en ce qu'**
avec l'information d'en-tête de données d'utilisateur (11) on transmet au moins un champ de données d'adresse source (25) qui comprend l'adresse source du message postal électronique (1).

6. Procédé selon l'une quelconque des revendications précédentes,
**caractérisé en ce qu'**
avec l'information d'en-tête de données d'utilisateur (11) on transmet un champ de données d'identification (30) qui comprend une identification du message postal électronique (1).

7. Procédé selon l'une quelconque des revendications précédentes,
**caractérisé en ce qu'**
avec l'information d'en-tête de données d'utilisateur (11) on transmet un champ de données de nom (35) qui comprend un nom de l'expéditeur du message postal électronique (1).

8. Procédé selon l'une quelconque des revendications précédentes,
**caractérisé en ce qu'**
une deuxième information d'en-tête (12) transmise avec le message court (5) indique la présence de l'information d'en-tête de données d'utilisateur (11).

9. Procédé selon l'une quelconque des revendications précédentes,
**caractérisé en ce qu'**
une troisième information d'en-tête (13) transmise avec le message court (5) spécifie le message postal électronique (1) comme partie d'un message postal électronique (1) total associé au moyen de la transmission de plusieurs messages courts.

10. Procédé selon l'une quelconque des revendications précédentes,
**caractérisé en ce que**
la fin du champ de données (20, 25, 30, 35) est à chaque fois spécifiée par un trait d'union.
